# EUROPÄISCHE PATENTSCHRIFT

(11) **EP 2 202 136 B1**
(45) Veröffentlichungstag und Bekanntmachung des Hinweises auf die Patenterteilung: **24.08.2011**
(21) Anmeldenummer: 10004203.5
(22) Anmeldetag: 17.01.2008
(51) Int. Cl.: B62J 15/00, B62J 15/02

(54) **Radschützer für ein Fahrrad**
Mudguard for bicycle
Garde-boue pour bicyclette

(30) Priorität: 19.01.2007 DE 202007000820 U
(43) Veröffentlichungstag der Anmeldung: 30.06.2010
(62) Teilanmeldung aus: 08000842.8
(73) Patentinhaber: sks metaplast Scheffer-Klute GmbH, 59846 Sundern (DE)
(72) Erfinder: Kordes, Sven, 59846 Sundern (DE); Grabski, Karsten, 59469 Ense (DE)
(74) Vertreter: Basfeld, Rainer

(56) Entgegenhaltungen:
- DE-U1- 9 108 780
- DE-U1- 9 311 363
- DE-U1-202004 002 073
- GB-A- 252 288
- GB-A- 2 344 803
- GB-A- 191 022 510

## Beschreibung

Die vorliegende Erfindung betrifft einen Radschützer für ein Fahrrad gemäß dem Oberbegriff des Anspruchs 1.

Ein Radschützer der vorgenanten Art ist beispielsweise aus dem deutschen Gebrauchsmustern DE 298 09 997 U1 bekannt. Dieses Schutzrecht zeigt beispielsweise eine Befestigungseinheit mit einem elastischen Gurtband, das um eine Sattelstütze oder ein anderes rohrförmiges Teil des Fahrrads gespannt werden kann. Dies ist eine vergleichsweise aufwendige Konstruktion, die nur in engen Grenzen an unterschiedliche Dicken der rohrförmigen Teile angepasst werden kann. Weiterhin können derartige Radschützer nur bedingt an unterschiedliche Hinterradgrößen von beispielsweise Kinderrädern angepasst werden.

Dokument GB 2344803 zeigt einen Radschützer für ein Fahrrad gemäß dem Oberbegriff von Anspruch 1.

Das der vorliegenden Erfindung zugrunde liegende Problem ist die Schaffung eines Radschützers der eingangs genannten Art, der flexibler einsetzbar ist.

Dies wird erfindungsgemäß durch einen Radschützer der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass das Spritzschutzteil ein Langloch aufweist, das sich in Längsrichtung des Spritzschutzteils erstreckt und zur mittelbaren oder unmittelbaren Verbindung mit der Befestigungseinheit dient. Durch dieses Langloch kann das Spritzschutzteil in unterschiedlichen Stellungen relativ zu dem Hinterrad positioniert werden, so dass eine Anpassung an unterschiedlich große Hinterräder gewährleistet ist.

Dabei kann vorgesehen sein, dass die Befestigungseinheit oder ein mit der Befestigungseinheit verbundenes Halteteil einen Befestigungszylinder mit einer Querbohrung aufweist, in die ein mit dem Spritzschutzteil verbindbares Befestigungselement eingreifen kann. Der Befestigungszylinder mit Querbohrung ermöglicht einerseits die Festlegung des, beispielsweise als Schraube ausgeführten, Befestigungselements relativ zu dem Halteteil oder der Befestigungseinheit. Andererseits kann der Befestigungszylinder eine Festlegung des Halteteils relativ zu der Befestigungseinheit ermöglichen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Explosionsansicht einer Ausführungsform eines erfindungsgemäßen Radschützers;
- Fig. 2: eine teilweise geschnittene Detailansicht des Radschützers gemäß Fig. 1;
- Fig. 3: eine weitere teilweise geschnittene Detailansicht des Radschützers gemäß Fig. 1;
- Fig. 4: eine Seitenansicht des Radschützers gemäß Fig. 1;
- Fig. 5: eine Draufsicht auf den Radschützer gemäß Fig. 1;
- Fig. 6: einen Schnitt gemäß den Pfeilen VI-VI in Fig. 5.

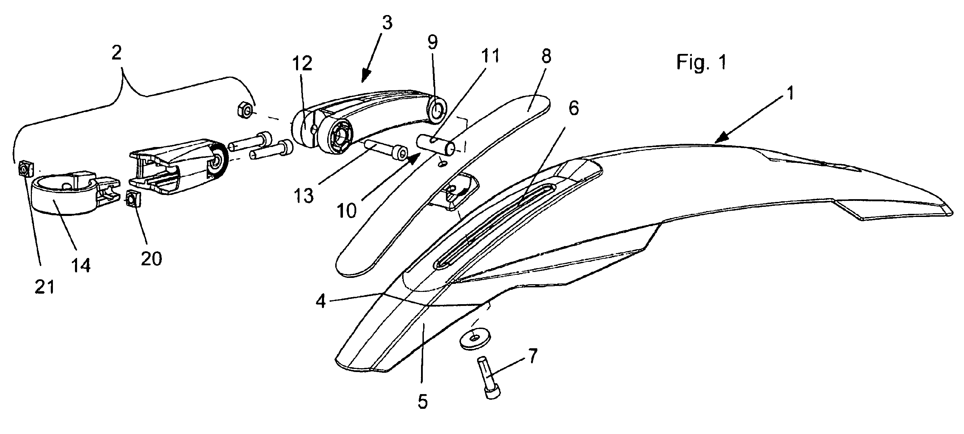

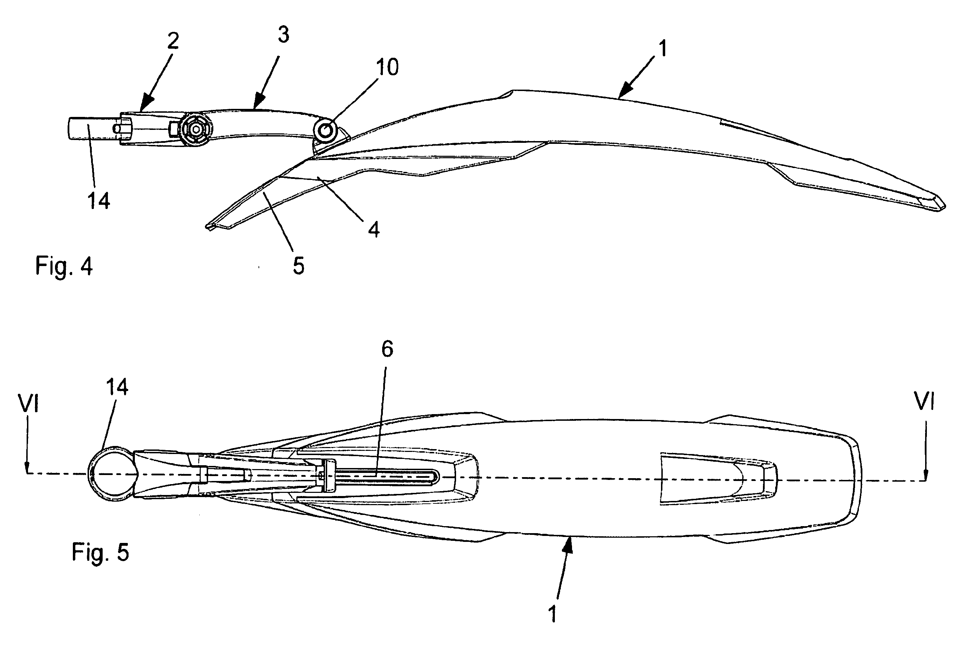

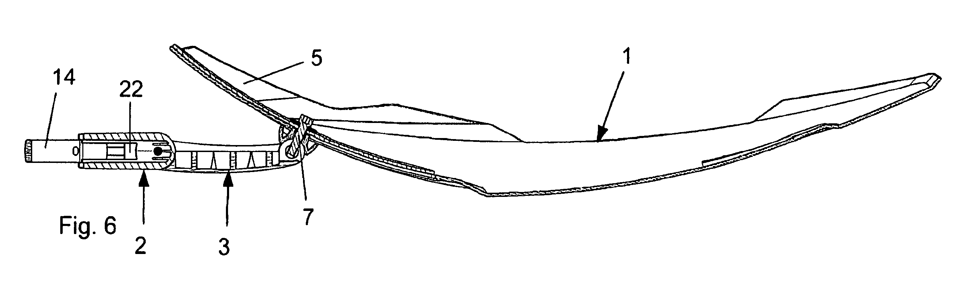

Die aus Fig. 1 bis Fig. 6 ersichtliche Ausführungsform eines erfindungsgemäßen Radschützers ist als Radschützer für ein Hinterrad eines Kinderfahrrades ausgebildet. Dieser Radschützer umfasst ein Spritzschutzteil 1, eine Befestigungseinheit 2 für die Befestigung des Spritzschutzteils an einem Teil eines Fahrrades, sowie ein Halteteil 3, das das Spritzschutzteil 1 mit der Befestigungseinheit 2 verbinden kann.

Das Spritzschutzteil 1 ist langgestreckt und an die Form eines Rades angepasst. In seinem in Gebrauchstellung vorderen Ende weist es eine Abschneidekante 4 auf, längs der der vordere Teil 5 des Spritzschutzteils abgeschnitten werden kann, um das Spritzschutzteil 1 an die Größe des Fahrrades anzupassen. Benachbart zu der Abschneidekante ist in dem Spritzschutzteil 1 ein Langloch 6 angeordnet, das sich in Längsrichtung des Spritzschutzteiles 1 erstreckt. Durch dieses Langloch kann eine Schraube 7 zur Befestigung des Spritzschutzteils 1 an dem Halteteil 3 hindurchgeführt werden. Das Langloch 6 ermöglicht eine Anpassung der Anbringung des Spritzschutzteils an die Größe des Hinterrades. Dies ist insbesondere bei Kinderfahrrädern, die viele unterschiedliche Größen aufweisen können, äußerst sinnvoll. Weiterhin ist eine flexible Abdeckung 8 vorgesehen, die derart auf dem Langloch angeordnet werden kann, dass kein Spritzwasser durch das Langloch 6 hindurchdringen kann.

Das Halteteil weist in seinem in Fig. 1 rechten Abschnitt eine durchgehende Bohrung 9 auf, in die ein Befestigungszylinder 10 mit einer Querbohrung 11 eingebracht werden kann. Dabei ist die Querbohrung 11 als Gewindebohrung ausgeführt und kann die Schraube 7 aufnehmen. Durch Einschrauben der Schraube 7 in die Querbohrung 11 kann sowohl das Spritzschutzteil 1 an dem Halteteil 3 befestigt werden, als auch der Winkel zwischen Halteteil 3 und Spritzschutzteil 1 fixiert werden. Das in Fig. 1 linke Ende des Halteteils 3 weist eine gabelförmige Aufnahme 12 auf, innerhalb der mittels einer Schraube 13 die Befestigungseinheit 2 festgelegt werden kann.

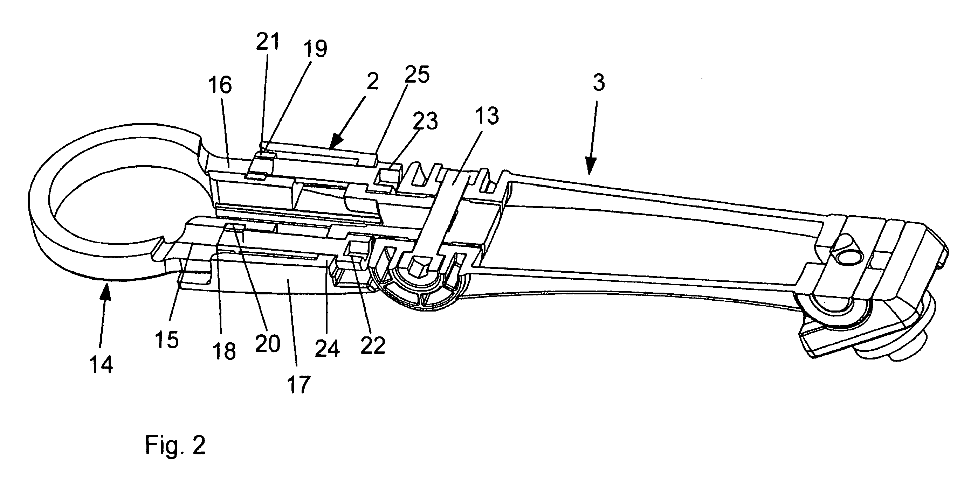

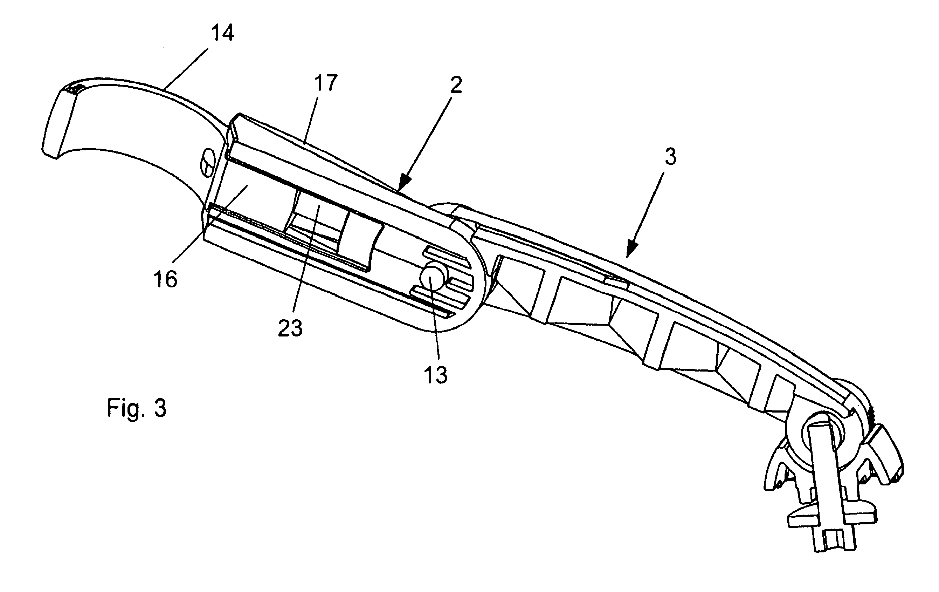

Die Befestigungseinheit 2 ist detailliert aus Fig. 2 und Fig. 3 ersichtlich. Die Befestigungseinheit 2 weist eine Schlaufe 14 (in Fig. 3 geschnitten dargestellt) auf, die um ein Sattelrohr oder ein Rahmenrohr des Fahrrades herumgelegt werden kann. Die Schlaufe kann dabei aus einem nicht elastischen oder nur wenig elastischen Kunststoff bestehen. Die Schlaufe ist nicht geschlossen und weist zwei Enden 15, 16 auf, die in einen Körper 17 der Befestigungseinheit 2 hineinragen. In den Enden 15, 16 ist jeweils eine Ausnehmung 18, 19 ausgebildet, in die als Befestigungsteile dienende Gewindemuttern 20, 21 eingebracht sind. In diese Gewindemuttern 20, 21 können Schrauben 22, 23 eingeschraubt werden, die an Anschlägen 24, 25 des Körpers 17 der Befestigungseinheit 2 anliegen können. Durch Anschrauben der Schrauben 22, 23 in die Gewindemuttern 20, 21 wird die Schlaufe 14 an der Sattelstütze oder dergleichen festgelegt.

## Patentansprüche

1. Radschützer für ein Fahrrad, insbesondere für ein Hinterrad eines Kinderfahrrades, umfassend
- eine Befestigungseinheit (2), mittels der der Radschützer an einem Teil eines Fahrrades anbringbar ist;
- ein Spritzschutzteil (1), das mittelbar oder unmittelbar mit der Befestigungseinheit (2) verbunden ist, wobei das Spritzschutzteil (1) ein Langloch (6) aufweist, das sich in Längsrichtung des Spritzschutzteils (1) erstreckt und zur mittelbaren oder unmittelbaren Verbindung mit der Befestigungseinheit (2) dient, wobei ein mit der Befestigungseinheit (2) verbundenes Halteteil (3) einen Befestigungszylinder (10) aufweist
**dadurch gekennzeichnet, dass**
- der Befestigungszylinder (10)
- eine Querbohrung (11) aufweist, in die eine mit dem Spritzschutzteil (1) verbindbare Schraube (7) eingreifen kann, die auch durch das Langloch (6) hindurch greifen kann, so dass durch Einschrauben der Schraube (7) in die Querbohrung (11) sowohl das Spritzschutzteil (1) an dem Halteteil (3) befestigt werden, als auch der Winkel zwischen Halteteil (3) und Spritzschutzteil (1) fixiert werden kann.

2. Radschützer nach Anspruch 1, **dadurch gekennzeichnet, dass** der Radschützer ein, insbesondere flexibles, Abdeckteil (8) umfasst, das derart im Bereich des Langlochs (6) angeordnet ist, dass ein Hindurchdringen von Spritzwasser durch das Langloch (6) verhindert werden kann.

## Claims

1. Mudguard for a bicycle, in particular for a rear wheel of a child's bicycle, comprising
- a fastening unit (2) by means of which the mudguard can be attached to part of a bicycle;
- a splash protection part (1) which is connected indirectly or directly to the fastening unit (2), wherein the splash protection part (1) has an elongated hole (6) which extends in the longitudinal direction of the splash protection part (1) and serves the indirect or direct connection to the fastening unit (2), and wherein a retaining part (3) which is connected to the fastening unit (2) has a fastening cylinder (10), **characterized in that**
- the fastening cylinder (10) has a transverse bore (11) in which a screw (7) which can be connected to the splash protection part (1) can engage, said screw also being able to reach through the elongated hole (6) such that, by the screw (7) being screwed into the transverse bore (11), both the splash protection part (1) can be fastened to the retaining part (3) and the angle between the retaining part (3) and the splash protection part (1) can be fixed.

2. Mudguard according to Claim 1, **characterized in that** the mudguard comprises an, in particular flexible, covering part (8) which is arranged in the region of the elongated hole (6) in such a manner that penetration of spray water through the elongated hole (6) can be prevented.

## Revendications

1. Garde-boue pour bicyclette, notamment pour une roue arrière d'une bicyclette d'enfant, comprenant
- une unité de fixation (2) au moyen de laquelle le garde-boue peut être monté sur une partie d'une bicyclette ;
- une partie de protection contre les projections (1), qui est raccordée de manière directe ou indirecte à l'unité de fixation (2), la partie de protection contre les projections (1) présentant un trou oblong (6) qui s'étend dans la direction longitudinale de la partie de protection contre les projections (1) et qui sert à la raccorder, de manière directe ou indirecte, à l'unité de fixation (2), une partie de retenue (3) raccordée à l'unité de fixation (2) présentant un cylindre de fixation (10),
**caractérisé en ce que**
- le cylindre de fixation (10) présente un alésage transversal (11) dans lequel une vis (7) pouvant être raccordée à la partie de protection contre les projections (1) peut venir en prise, laquelle peut aussi s'engager à travers le trou oblong (6) de sorte que par vissage de la vis (7) dans l'alésage transversal (11), la partie de protection contre les projections (1) puisse être fixée à la partie de retenue (3) et l'angle entre la partie de retenue (3) et la partie de protection contre les projections (1) puisse être fixé.

2. Garde-boue selon la revendication 1, **caractérisé en ce que** le garde-boue comprend une partie de recouvrement (8), en particulier flexible, qui est disposée dans la région du trou oblong (6) de telle sorte qu'une pénétration d'eau de projection à travers le trou oblong (6) soit empêchée.
